# EUROPÄISCHE PATENTSCHRIFT

(11) **EP 2 282 902 B1**
(45) Veröffentlichungstag und Bekanntmachung des Hinweises auf die Patenterteilung: **27.02.2013**
(21) Anmeldenummer: 09753577.7
(22) Anmeldetag: 18.03.2009
(51) Int. Cl.: B60G 15/06, B60G 17/02

(54) **FEDERBEIN FÜR EIN KRAFTFAHRZEUG MIT EINEM AXIAL VERSTELLBAREN FEDERTELLER**
SPRING STRUT FOR A MOTOR VEHICLE HAVING AN AXIALLY ADJUSTABLE SPRING PLATE
JAMBE DE SUSPENSION POUR UN VÉHICULE À MOTEUR COMPORTANT UNE CUVETTE DE RESSORT AJUSTABLE DANS LE SENS AXIAL

(30) Priorität: 24.05.2008 DE 102008025020
(43) Veröffentlichungstag der Anmeldung: 16.02.2011
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2009/001974
(87) Internationale Veröffentlichungsnummer: WO 2009/143922

(56) Entgegenhaltungen:
- EP-A2- 1 681 184
- DE-A1-102007 051 971
- DE-B3-102005 001 743
- US-A- 4 248 410
- US-A- 6 164 673

## Beschreibung

Die Erfindung betrifft ein Federbein für ein Kraftfahrzeug mit einem axial verstellbaren Federteller gemäß der im Oberbegriff des Anspruches 1 angegebenen Art.

Ein gattungsgemäßes Federbein für ein Kraftfahrzeug mit einem axial verstellbaren Federteller ist in der DE 10 2005 001 743 B3 beschrieben. Das offenbarte Federbein umfasst im wesentlichen einen Schwingungsdämpfer mit einem Zylinder und einer darin axial verschiebbar gelagerten Kolbenstange, zwei mit dem axial verstellbaren Federteller in Wirkverbindung stehende Tragfedern, einen Drehantrieb über den eine Translationsbewegung des axial verstellbaren Federtellers bewirkbar ist, sowie einen ersten und einen zweiten Faltenbalg, die konzentrisch zum Drehantrieb angeordnet sind. Der erste, obere Faltenbalg ist dabei mit seinem unteren Befestigungsabschnitt am axial beweglichen Federteller und mit seinem oberen Befestigungsabschnitt am Gehäuse des Federbeins festgelegt. Der zweite, untere Faltenbalg ist mit seinem oberen Ende am axial beweglichen Federteller und mit seinem unteren Ende an einem zweiten, stationären Federteller festgelegt.

Bekanntlich erfahren die Federenden einer Schraubendruckfeder bei einer Ein- bzw. Ausfederung eine Drehung um die Federlängsachse, wenn die Federenden nicht eingespannt sind.

Übertragen auf das obige Federbein bedeutet dies, dass bei einer Ein- und Ausfederung der axial bewegliche Federteller zu einer Drehbewegung angeregt wird. Die Folge davon ist, dass die am Federteller festgelegten Faltenbälge neben einer in axiale Richtung zu beobachtenden Verkürzung bzw. Verlängerung auch eine Verdrillung um ihre Längsachse erfahren.

Während ein herkömmlicher Faltenbalg aufgrund seiner Formgebung für eine Verkürzung/Verlängerung in axiale Richtung ausgelegt ist, und somit diese Beanspruchung unschädlich ist, kann die zusätzliche Verdrillung zu einem vorzeitigen Versagen des Faltenbalgs führen. Das heißt der Faltenbalg könnte reißen, undicht werden und seine ureigenste Funktion, nämlich eine Dichtfunktion zu übernehmen, nicht mehr erfüllen.

Der Erfindung liegt die Aufgabe zu Grunde, ein Federbein für ein Kraftfahrzeug mit einem axial verstellbaren Federteller gemäß der im Oberbegriff des Anspruches 1 angegebenen Art unter Vermeidung der genannten Nachteile derart weiterzubilden, so dass eine längere Lebensdauer des Faltenbalgs bzw. der Faltenbälge gewährleistet ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildung der Erfindung.

Nach der Erfindung umfasst das Federbein für ein Kraftfahrzeug mit einem axial verstellbaren Federteller einen Schwingungsdämpfer mit einem Zylinder und einer darin axial verschiebbar gelagerten Kolbenstange, mindestens eine mit dem axial verstellbaren Federteller in Wirkverbindung stehende Tragfeder, einen Drehantrieb über den eine Translationsbewegung des axial verstellbaren Federtellers bewirkbar ist, sowie mindestens einen den Drehantrieb konzentrisch umfassenden Faltenbalg, wobei der Faltenbalg über einen ersten Befestigungsabschnitt am axial verstellbaren Federteller und über einen zweiten Befestigungsabschnitt am Federbein oder Kraftfahrzeugaufbau gelagert ist. Erfindungsgemäß ist dabei der erste und/oder zweite Befestigungsabschnitt des Faltenbalgs drehbar gelagert. D. h. also, dass der erste Befestigungsabschnitt des Federbalgs drehbar am axial verstellbaren Federteller und/oder der zweite Befestigungsabschnitt des Federbalgs drehbar am Federbein oder Kraftfahrzeugaufbau gelagert ist.

In vorteilhafter Weise ist durch die erfindungsgemäßen Merkmale der Faltenbalg von der durch eine Ein- bzw. Ausfederung induzierten Drehbewegung um die Federlängsachse entkoppelt. Eine für die Lebensdauer des Federbalgs nachteilige Verdrillung des Federbalgs findet somit nicht statt. Die Folge davon ist, dass der Faltenbalg lediglich mit der für ihn typischen Beanspruchung Verkürzung/Verlängerung beansprucht ist und somit eine längere Lebensdauer aufweist.

Gemäß einer Ausführungsform der Erfindung ist dabei der erste und/oder zweite Befestigungsabschnitt des Faltenbalgs bzw., wenn mehrere Faltenbälge vorgesehen sind, die ersten und/oder zweiten Befestigungsabschnitte der Faltenbälge mittels eines Wälzlagers drehbar gelagert. Die Verwendung eines Wälzlagers erweist sich als vorteilhaft, da dies eine kostengünstige, lange Lebensdauer aufweisende Lagerung darstellt.

Vorzugsweise weist das Wälzlager eine Lippendichtung auf. Dies hat den Effekt, dass ein Eindringen von Schmutz durch das Walzläger in den Bereich des Drehantriebs verhindert wird, d. h. eine ausreichende Dichtfunktion ist gewährleistet

Vorzugsweise ist der Faltenbalg als ein Gummibalg ausgebildet.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispiele näher beschrieben.

In der Beschreibung, in den Patentansprüchen, in der Zusammenfassung und in der Zeichnung werden die in der unten aufgeführten Liste der Bezugszeichen verwendeten Begriffe und zugeordneten Bezugszeichen verwendet. In der Zeichnung bedeuten:
- Fig. 1: Eine schematische Schnittdarstellung eines Federbeins für ein Kraftfahrzeug mit einem axial verstellbaren Federteller nach dem Stand der Technik;
- Fig. 2: eine schematische Schnittdarstellung eines Ausschnitts eines erfindungsgemäßen Federbeins, und
- Fig. 3: eine schematische Schnittdarstellung eines Ausschnitts einer weiteren Ausführungsform eines erfindungsgemäßen Federbeins.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

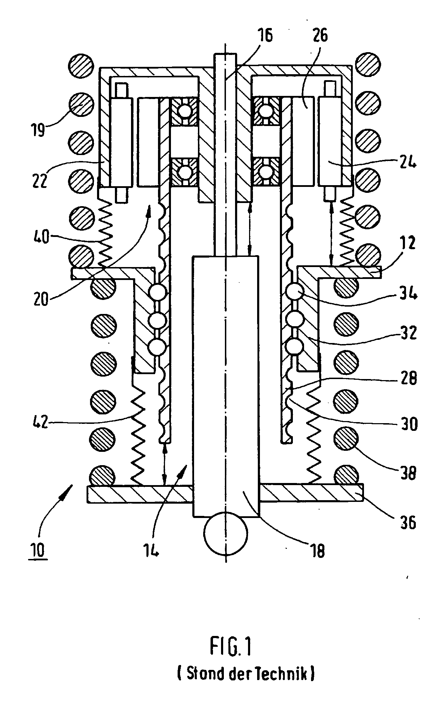

Das in Fig. 1 in einer vereinfachten Schnittdarstellung mehr oder minder schematisch dargestellte, insgesamt mit der Bezugsziffer 10 bezeichnete Federbein mit einem axial verstellbaren Federteller 12 umfasst im wesentlichen einen an sich bekannten Schwingungsdämpfer 14 mit einer Kolbenstange 16, die axial in einem Zylinder 18 verschiebbar gelagert ist.:

Eine Tragfeder 19 stützt sich zwischen dem verstellbaren Federteller 12 und einem weiteren, hier aus Gründen der Übersichtlichkeit nicht dargestellten, Federteller ab.

Zur axialen Verstellung des Federtellers 12 verfügt das Federbein über einen Drehantrieb 20 z. B. in der Ausgestaltung eines Motors..In einem Gehäuse 22, das mit einem Fahrzeugaufbau verbunden ist, befindet sich ein Stator 24, der einen Rotor 26 antreibt. Der Rotor 26 ist wiederum fest mit einer Gewindespindel 28 verbunden, die auf Ihrem Außendurchmesser ein Bewegungsgewinde 30 aufweist, in das eine Gewindemutter 32, die mit dem verstellbaren Federteller 12 verbunden ist, gegebenenfalls unter Verwendung von Kugeln 34 eingreift. Eine Drehbewegung des Rotors 26 wird von der Gewindespindel/Gewindemutter 28, 32 in eine axiale Verstellbewegung des Federtellers 12 umgesetzt.

Zwischen dem verstellbaren Federteller 12 und einem weiteren Federteller 36 ist eine zweite Feder 38 verspannt. Der Federteller 36 ist ortsfest zu dem Zylinder 18 des Schwingungsdämpfers 14 angeordnet.

Um ein Eindringen von Schmutz und Wasser in den Drehantrieb 20 und insbesondere in den die Gewindespindel 30 und die Gewindemutter 32 umfassenden Kugelgewindetrieb zu verhindern, ist zwischen dem axial beweglichen Federteller 12 und dem Gehäuse 22 ein erster Faltenbalg 40 und zwischen dem axial beweglichen Federteller 12 und dem Federteller 36 ein zweiter Faltenbalg 42 angeordnet.

Bekanntlich erfahren die Federenden einer Schraubendruckfeder bei einer Ein- bzw. Ausfederung eine Drehung um die Federlängsachse, wenn die Federenden nicht eingespannt sind.

Übertragen auf das vorliegende Federbein bedeutet dies, dass bei einer Ein- bzw. Ausfederung des Rades der axial bewegliche Federteller 12 zu einer Drehbewegung angeregt wird und somit die Faltenbälge 40, 42 neben einer Verkürzung bzw. Verlängerung auch eine Verdrillung um ihre Längsachse erfahren.

Da in der Regel ein herkömmlicher Faltenbalg für diese Belastung nicht ausgelegt ist, hat dies den Nachteil, dass ein vorzeitiger Verschleiß der Faltenbälge 40, 42 zu beobachten ist.

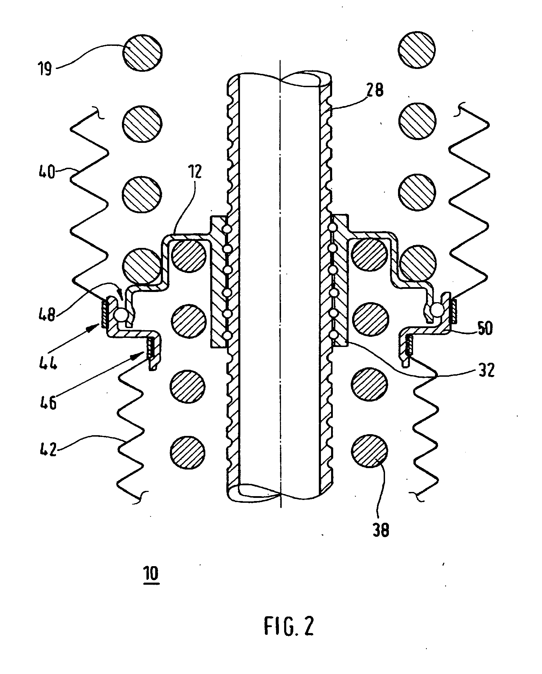

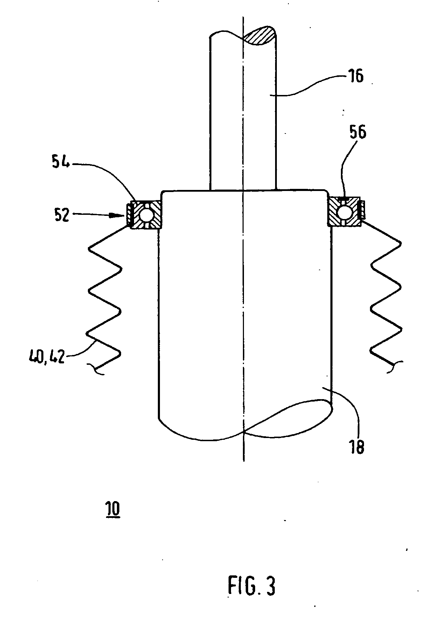

Hier setzt nun die Erfindung ein. Aus Gründen der Übersichtlichkeit ist in Fig. 2 und 3 jeweils nur der zum Verständnis der Erfindung relevante Teilbereichs des Federbeins 10 dargestellt.

Gemäß der in Fig. 2 dargestellten Ausführungsform stützen sich zwei Federn 19, 38 auf dem axial beweglichen Federteller 12 ab.

Wie Fig. 2 zu entnehmen ist, ist der erste Faltenbalg 40 über einen ersten Befestigungsabschnitt 44 und der zweite Faltenbalg 42 über einen ersten Befestigungsschnitt 46 drehbar am Federteller 12 gelagert.

Hierzu sind der erste und zweite Faltenbalg 40, 42 jeweils über ihren ersten Befestigungsabschnitt 44, 46 an einem mittels einer Kugellagerung 48 drehbar am Federteller 12 gelagerten, Befestigungstopf 50, fest verbunden. Die Festlegung der beiden ersten Befestigungsabschnitte 44, 46 der Faltenbälge 40, 42 über einen gemeinsamen Befestigungstopf 50 hat vorliegend den Effekt, dass weniger Bauteile für die Ausgestaltung der drehbaren Lagerung benötigt werden.

Gemäß der in Fig. 3 dargestellten Ausführungsform ist der Faltenbalg 40 über einen zweiten Befestigungsabschnitt 52 am Federbein 10, nämlich am Zylinder 18 des Schwingungsdämpfers 14 drehbar gelagert.

Hierzu ist der zweite Befestigungsabschnitt des Faltenbalgs 40 über ein Wälzlager 54 drehbar am Schwingungsdämpfer 14 gelagert. Um ein Eindringen von Schmutz, Feuchtigkeit zu verhindern, weist das Wälzlager 54 eine Lippendichtung 56 auf.

Durch die in Fig. 2 und 3 dargestellte drehbare Lagerung des Faltenbalgs 40, 42 ist sichergestellt, dass die durch eine Ein- bzw. Ausfederung induzierte Drehbewegung des Federtellers 12 vom Faltenbalg 40, 42 entkoppelt ist, und somit die nachteilige Verdrillung des Faltenbalg 40, 42 nicht stattfindet.

### Bezugszeichenliste

- 10: Federbein
- 12: axial verstellbarer Federteller
- 14: Schwingungsdämpfer
- 16: Kolbenstange
- 18: Zylinder
- 19: Tragfeder
- 20: Drehantrieb
- 22: Gehäuse
- 24: Stator
- 26: Rotor
- 28: Gewindespindel
- 30: Bewegungsgewinde
- 32: Gewindemutter
- 34: Kugeln
- 36: zweiter Federteller
- 38: zweite Feder
- 40: erster Faltenbalg
- 42: zweiter Faltenbalg
- 44: erster Befestigungsabschnitt des erster Faltenbalgs
- 46: erster Befestigungsabschnitt des zweiten Faltenbalgs
- 48: Kugellagerung
- 50: Befestigungstopf
- 52: zweiten Befestigungsabschnitt
- 54: Wälzlager
- 56: Lippendichtung

## Patentansprüche

1. Federbein (10) für ein Kraftfahrzeug mit einem axial verstellbaren Federteller (12), umfassend
- einen Schwingungsdämpfer (14) mit einem Zylinder (18) und einer darin axial verschiebbar gelagerten Kolbenstange (16);
- mindestens eine mit dem axial verstellbaren Federteller (12) in Wirkverbindung stehende Tragfeder (19, 38);
- einen Drehantrieb (20) über den eine Translationsbewegung des axial verstellbaren Federtellers (12) bewirkbar ist, sowie
- mindestens einen den Drehantrieb (20) konzentrisch umfassenden Faltenbalg (40, 42), wobei der Faltenbalg (40, 42) über einen ersten Befestigungsabschnitt (44, 46) am axial verstellbaren Federteller (12) und über einen zweiten Befestigungsabschnitt (52) am Federbein (10) oder Kraftfahrzeugaufbau befestigt ist,
**dadurch gekennzeichnet, dass** der erste und/oder zweite Befestigungsabschnitt (44, 46, 52) des Faltenbalgs (40, 42) drehbar gelagert ist.

2. Federbein nach Anspruch 1, **dadurch gekennzeichnet, dass** der erste und/oder zweite Befestigungsabschnitt (44, 46, 52) des Faltenbalgs (40, 42) mittels eines Wälzlagers (54) drehbar gelagert ist.

3. Federbein nach Anspruch 2, **dadurch gekennzeichnet, dass** das Wälzlager (54) eine Lippendichtung (56) aufweist.

4. Federbein nach einem der vorgenannten Ansprüche, **dadurch gekennzeichnet, dass** der Faltenbalg (40, 42) als ein Gummibalg ausgebildet ist.

## Claims

1. Suspension strut (10) for a motor vehicle comprising an axially adjustable spring collar (12), comprising:
- a shock absorber (14) comprising a cylinder (18) and a piston rod (16) mounted therein in an axially displaceable manner;
- at least one suspension spring (19, 38) which is operatively connected to the axially adjustable spring collar (12);
- a rotary drive (20), via which a translational movement of the axially adjustable spring plate (12) can be brought about, and
- at least one bellows (40, 42) concentrically surrounding the rotary drive (20), the bellows (40, 42) being fastened to the axially adjustable spring collar (12) via a first fastening portion (44, 46) and to the suspension strut (10) or motor vehicle body via a second fastening portion (52),
**characterised in that** the first and/or second fastening portion (44, 46, 52) of the bellows (40, 42) is rotatably mounted.

2. Suspension strut according to claim 1, **characterised in that** the first and/or second fastening portion (44, 46, 52) of the bellows (40, 42) is rotatably mounted by means of a rolling bearing (54).

3. Suspension strut according to claim 2, **characterised in that** the rolling bearing (54) comprises a lip seal (56).

4. Suspension strut according to any of the preceding claims, **characterised in that** the bellows (40, 42) is designed as a rubber bellows.

## Revendications

1. Jambe de force à ressort (10) pour un véhicule automobile avec une cuvette de ressort (12) réglable axialement, comprenant :
- un amortisseur de vibrations (14) avec un cylindre (18) et une tige de piston (16) montée de manière à pouvoir se déplacer axialement dans celui-ci ;
- au moins un ressort de suspension (19, 38) coopérant avec une cuvette de ressort (12) réglable axialement ;
- un entraînement rotatif (20) par lequel peut être effectué un mouvement de translation de la cuvette de ressort réglable axialement (12), ainsi que
- au moins un soufflet pliant (40, 42) entourant concentriquement l'entraînement rotatif (20), dans laquelle le soufflet pliant (40, 42) est fixé via une première section de fixation (44, 46) sur la cuvette de ressort réglable axialement (12) et via une seconde section de fixation (52) sur la jambe de force à ressort (10) ou sur la carrosserie du véhicule automobile,
**caractérisé en ce que** la première et/ou la seconde section de fixation (44, 46, 52) du soufflet pliant (40, 42) est ou sont montés à rotation.

2. Jambe de force à ressort selon la revendication 1, **caractérisé en ce que** la première et/ou la seconde section de fixation (44, 46, 52) du soufflet pliant (40, 42) est ou sont montés à rotation au moyen d'un palier à roulement (54).

3. Jambe de force à ressort selon la revendication 2, **caractérisée en ce que** le palier de roulement (54) présente un joint étanche à lèvre (56).

4. Jambe de force à ressort selon l'une quelconque des revendications précédentes, **caractérisée en ce que** le soufflet pliant (40, 42) se présente sous la forme d'un soufflet de caoutchouc.
